# FASCICULE DE BREVET EUROPEEN

(11) **EP 2 678 823 B1**
(45) Date de publication et mention de la délivrance du brevet: **30.09.2020**
(21) Numéro de dépôt: 12704435.2
(22) Date de dépôt: 21.02.2012
(51) Int. Cl.: G06T 7/00, H04N 13/00

(54) **DISPOSITIF ET PROCÉDÉ DE GESTION DE LA POSITION DU PLAN FOCAL DANS UNE SCÈNE STÉRÉOSCOPIQUE**
VORRICHTUNG UND VERFAHREN ZUR HANDHABUNG DER POSITION DER FOKALEBENE BEI EINER STEREOSKOPISCHEN SZENE
DEVICE AND METHOD FOR MANAGING THE POSITION OF THE FOCAL PLANE IN A STEREOSCOPIC SCENE

(30) Priorité: 23.02.2011 FR 1151467
(43) Date de publication de la demande: 01.01.2014
(73) Titulaire: NINTENDO EUROPEAN RESEARCH AND DEVELOPMENT, 75001 Paris (FR)
(72) Inventeur: DELATTRE, Alexandre, F-78220 Viroflay (FR); LARRIEU, Jérôme, F-64240 Hasparren (FR)
(74) Mandataire: Santarelli
(86) Numéro de dépôt international: PCT/EP2012/052943
(87) Numéro de publication internationale: WO 2012/113797

(56) Documents cités:
- EP-A1- 1 884 893
- EP-A2- 2 280 555
- US-A- 6 163 337
- US-A1- 2004 114 218
- US-A1- 2007 047 040

## Description

La présente invention concerne le domaine des systèmes de vision stéréoscopique et plus particulièrement la gestion de la position du plan focal dans une scène stéréoscopique.

Les images stéréoscopiques sont typiquement composées d'une image gauche et d'une image droite d'une même scène. Ces deux images sont prises par des caméras depuis un point de vue légèrement décalé. Généralement, les deux caméras sont parallèles et espacées de quelques centimètres. Une vidéo stéréoscopique est composée de deux flux vidéo, un flux vidéo gauche et un flux vidéo droit.

La stéréoscopie est due à l'effet de parallaxe. Cet effet se traduit par le fait qu'un même objet apparaît dans les deux images, gauche et droite, légèrement translaté. La valeur de la translation dépend de la profondeur, c'est-à-dire la distance aux caméras, de l'objet.

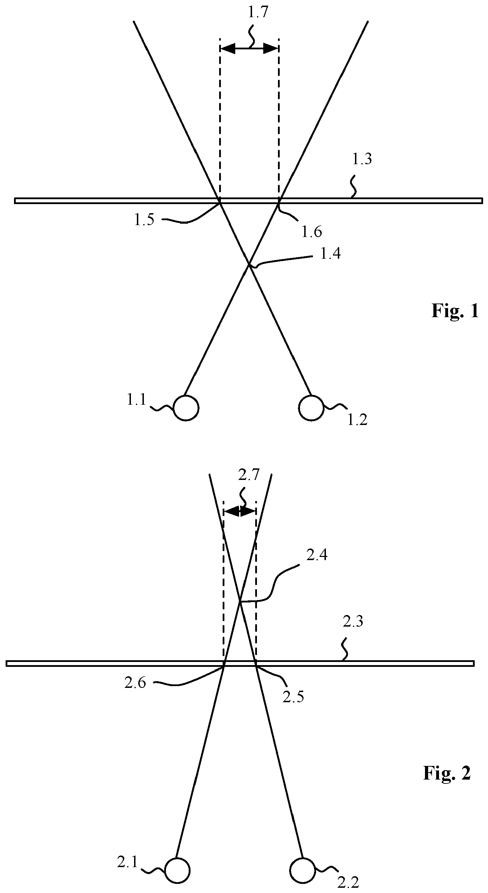

Sur l'exemple de la Fig. 1, un objet est visualisé sur un écran stéréoscopique 1.3. Les yeux 1.1 et 1.2 de l'utilisateur sont représentés. L'objet se situe sur l'image gauche au point 1.6 et sur l'image droite au point 1.5. Ces points sont distants d'une valeur de translation 1.7, cette valeur exprimée en translation dans l'image droite par rapport à l'image gauche est une translation négative. Lorsque les yeux de l'utilisateur vont s'accommoder pour visualiser ce point, il apparaîtra au point 1.4 comme se trouvant devant l'écran.

Sur l'exemple de la Fig. 2, un objet est visualisé sur un écran stéréoscopique 2.3. Les yeux 2.1 et 2.2 de l'utilisateur sont représentés. L'objet se situe sur l'image gauche au point 2.6 et sur l'image droite au point 2.5. Ces points sont distants d'une valeur de translation 2.7, cette valeur exprimée en translation dans l'image droite par rapport à l'image gauche est une translation positive. Lorsque les yeux de l'utilisateur vont s'accommoder pour visualiser ce point, il apparaîtra au point 2.4 comme se trouvant derrière l'écran.

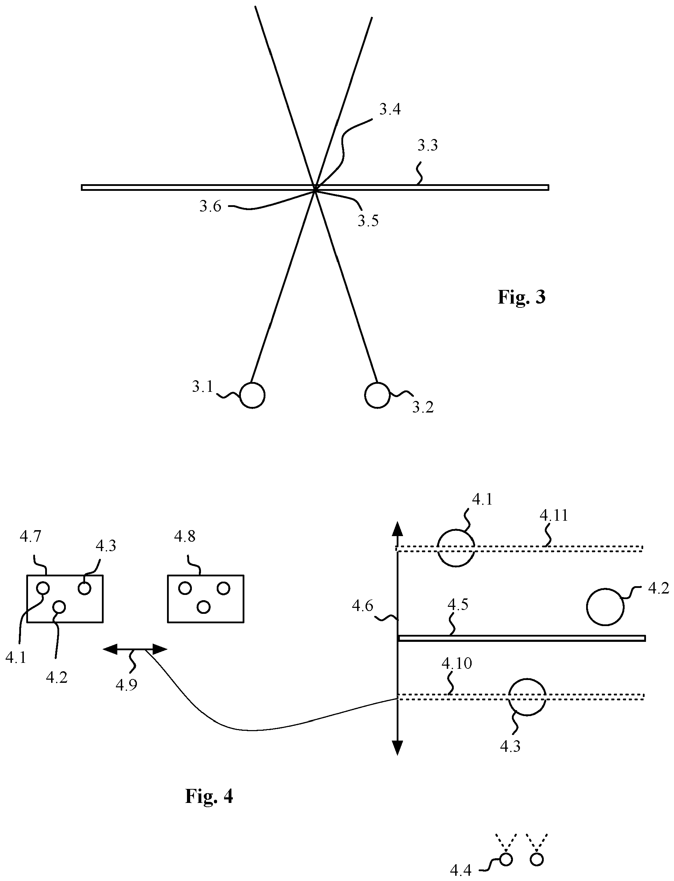

Sur l'exemple de la Fig. 3, un objet est visualisé sur un écran stéréoscopique 3.3. Les yeux 3.1 et 3.2 de l'utilisateur sont représentés. L'objet se situe sur l'image gauche au point 3.6 et sur l'image droite au point 3.5. Ces points se confondent, la translation pour ce point est nulle entre les deux images. Lorsque les yeux de l'utilisateur vont s'accommoder pour visualiser ce point, il apparaîtra au point 3.4 comme se trouvant au niveau de l'écran.

Ces figures illustrent le fait que les points qui se superposent dans les images gauche et droite apparaissent sur l'écran. Les objets sujets à une valeur de translation négative, ou parallaxe négative, apparaissent devant l'écran. Les objets sujets à une valeur de translation positive, ou parallaxe positive, apparaissent derrière l'écran. La valeur de parallaxe est directement fonction de la profondeur de l'objet dans la scène capturée.

On appelle plan focal d'une scène stéréoscopique, le plan perpendiculaire aux axes optiques des caméras situé à une profondeur donnée telle que tous les points représentant des objets dans ce plan sont représentés dans les images gauche et droite avec une parallaxe nulle.

Les axes optiques des caméras réalisant la prise de vue stéréoscopique étant typiquement parallèles, les objets à l'infini se superposent parfaitement dans les deux images tandis que les objets plus près subissent une translation d'autant plus forte que l'objet est proche des caméras. Les images prises par un tel système ont donc un plan focal à l'infini. Lorsqu'elles sont projetées sur un écran, l'intégralité de la scène est située devant cet écran. On constate que la visualisation d'une vidéo stéréoscopique où le plan focal est ainsi situé à l'infini tend à être inconfortable à l'œil. Un plan focal situé globalement devant la scène avec de rares objets qui peuvent se situer devant le plan focal est beaucoup plus confortable à visualiser.

US 6163337 A (Azuma Takeo et Al), 19 décembre 2000, et US 2007/047040 A1 (Ha Tae-Hyeun), 1 mars 2007 (2007-03-01), divulguent des procédés de gestion de la position du plan focal dans une scène stéréoscopique en utilisant la translation dominant.

EP 1884893 A1 (Mitsubishi Electric Inf Tech et Al) 6 février 2008, et US 2004/114218 A1 (A. Karlsson et Al), 17 juin 2004, divulguent des procédés pour le calcule de la translation entre deux images en utilisant la projection sur un axe.

EP 2280555 A2 (Fujifilm Corp), 2 février 2011, divulgue un procédé pour calculer la parallaxe représentative en utilisant un histogramme de la fréquence des parallaxes.

L'invention est définie par le procédé selon la revendication 1 et par le dispositif selon la revendication 6.

Selon un mode particulier de réalisation de l'invention, l'étape de calcul de la valeur de translation dominante pour chacune des zones comprend une étape de projection de la zone gauche et de la zone droite sur une ligne gauche et une ligne droite ; une étape de calcul de la corrélation entre la ligne gauche et la ligne droite pour plusieurs valeurs de translation et une étape de détermination de la valeur de translation pour laquelle la corrélation est la meilleure.

Selon un mode particulier de réalisation de l'invention, l'étape de détermination d'une valeur de translation relative entre les images gauche et droite comprend une étape de classement des valeurs de translation dominantes de chaque zone par groupe de valeurs proches ; une étape de calcul de la valeur moyenne des valeurs de translation dominantes au sein de chaque groupe et une étape de choix de la valeur moyenne la plus forte qui correspond au groupe le plus proche, comme valeur de translation relative entre les images gauche et droite.

Selon un mode particulier de réalisation de l'invention, le procédé comprend en outre une étape d'élimination des zones pour lesquelles la valeur de translation dominante obtenue est aberrante.

Selon un mode particulier de réalisation de l'invention, le procédé comprend en outre une étape d'élimination des groupes de zones ne contenant pas un nombre de zones au moins égal à un seuil donné.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 illustre les positions d'un point apparaissant derrière le plan focal.
La Fig. 2 illustre les positions d'un point apparaissant devant le plan focal.
La Fig. 3 illustre les positions d'un point apparaissant dans le plan focal.
La Fig. 4 illustre le procédé de déplacement du plan focal dans l'exemple de réalisation de l'invention.
La Fig. 5 illustre un exemple de réalisation du procédé de gestion du plan focal. La Fig. 6 illustre un découpage par zone d'une image.
La Fig. 7 illustre la projection sur une ligne d'une zone.
La Fig. 4 illustre le procédé de déplacement du plan focal. Une scène comprend des objets 4.1, 4.2 et 4.3 situés chacun à une profondeur donnée telle que visualisée par un observateur 4.4. La scène est visualisée sur un écran 4.5. Pour l'observateur 4.4, le plan focal de la scène se confond avec l'écran. Les objets apparaissent devant l'écran ou derrière l'écran s'ils se trouvent devant le plan focal ou derrière le plan focal.

La scène est créée à partir d'une image gauche 4.7 et d'une image droite 4.8 qui chacune représentent la scène et ses objets. Nous avons vu que le plan focal correspond aux objets dont la localisation dans les images gauche et droite se superpose. Les objets hors du plan focal subissent une parallaxe, négative pour les objets devant le plan focal et positive pour les objets derrière le plan focal.

Si l'on veut que le plan focal soit situé au niveau de l'objet 4.3, par exemple, il suffit d'effectuer une translation relative des images gauche et droite pour que l'objet 4.3 se superpose dans les deux images. Le plan focal vient alors dans la position 4.10. De même, si l'on veut que le plan focal soit situé au niveau de l'objet 4.1, par exemple, il suffit d'effectuer une translation relative des images gauche et droite pour que l'objet 4.1 se superpose dans les deux images. Le plan focal vient alors dans la position 4.11.

On constate donc que l'on peut jouer sur la profondeur 4.6 du plan focal en effectuant des translations relatives 4.9 entre les images gauche et droite de la scène.

Lors de la prise de vue, les caméras ont un axe optique parallèle. De ce fait, les images gauche et droite se superposent pour les objets à l'infini. Lorsque de telles scènes sont visualisées sur l'écran, l'intégralité de la scène apparaît donc devant le plan focal et donc comme « sortant » de l'écran. La visualisation nécessite alors de constants ajustements de l'accommodation dans une zone proche des yeux et se révèle inconfortable.

Il est donc avantageux de déplacer le plan focal des images d'une séquence stéréoscopique pour faire « reculer » la scène. On peut montrer que la séquence est confortable à visualiser lorsque l'essentiel de la scène se trouve derrière l'écran et que seuls de rares objets viennent à passer devant l'écran.

Pour ce faire, il faut donc calculer la valeur de translation relative que l'on doit appliquer aux images gauche et droite pour déplacer le plan focal et le positionner à une valeur de profondeur donnée. Cette valeur de profondeur est calculée en fonction d'une mesure des profondeurs des objets présents dans la scène. Lorsque l'on a mesuré ces profondeurs, on détermine une profondeur telle que l'essentiel de la scène se trouve derrière le plan focal. On considère que c'est le cas par exemple lorsque plus de 50% de la surface des images apparaît comme située derrière le plan focal.

Avantageusement, il n'est pas nécessaire de calculer effectivement les valeurs de profondeur. La profondeur étant liée à la valeur de parallaxe et donc à la valeur de translation, on peut se contenter de calculer les valeurs de translation pour les différents objets de la scène et appliquer une valeur de translation relative aux images calculée en fonction de ces valeurs de translation pour les objets.

Plusieurs politiques de gestion du plan focal peuvent être adoptées ici. Selon un premier exemple de réalisation, on cherche à placer le plan focal de façon à ce que l'essentiel de la scène soit derrière le plan focal.

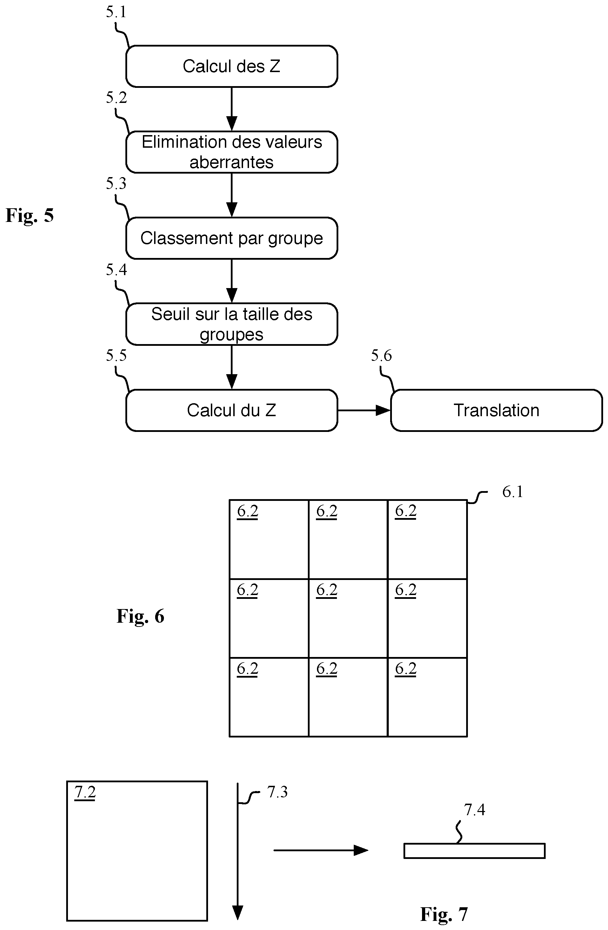

Un exemple de réalisation du procédé de gestion du plan focal selon ce premier mode de réalisation est illustré par la Fig. 5. Lors d'une première étape 5.1, on détermine dans les images gauche et droite au moins une zone. En effet, selon certains modes de réalisation, on analyse l'ensemble de l'image ou on se concentre sur une zone d'intérêt dans l'image, typiquement une zone centrale. Selon d'autres modes de réalisation, on divise les images en une pluralité de zones. On calcule alors les valeurs, appelées Z, de translation dominante de chacune des zones de l'image. Le découpage peut se faire, par exemple, selon le procédé illustré par la Fig. 6. Dans l'exemple de réalisation, une image 6.1 est divisée en un ensemble de zones 6.2 ici déterminées par un quadrillage équitable en 9 zones.

Chaque zone est projetée sur une ligne selon le schéma de la Fig. 7. Une zone 7.2 ou chaque colonne est sommée selon l'opération 7.3 pour donner une seule ligne 7.4. De cette façon on obtient une ligne qui est représentative de la zone selon l'axe horizontal.

On cherche alors à déterminer la parallaxe dominant sur la zone par une corrélation de la ligne gauche obtenue pour la zone dans l'image gauche avec la ligne droite obtenue pour la zone dans l'image droite. La corrélation est faite par somme des valeurs absolues des différences pour chaque valeur testée de translation desdites lignes. On détermine ainsi la translation horizontale pour laquelle la corrélation est la meilleure et on en déduit la translation Z dominante pour la zone.

La corrélation peut être faite par tout autre moyen, par exemple par somme des carrés des différences. Alternativement, la translation peut également être déterminée par calcul de la transformée de Fourier des lignes gauche et droite que l'on divise ensuite membre à membre. On calcule alors la transformée de Fourier inverse. L'indice de la valeur de norme maximale au sens des nombres complexes donne alors la valeur de translation optimale.

Alternativement, la translation peut également être déterminée par calcul direct des parallaxes en deux dimensions, par exemple par comparaison de sous-blocs de l'image, c'est à dire sans projection préalable des images sur des lignes. Cette méthode étant naturellement plus précise mais plus lente.

Le fait de faire la corrélation sur la projection de chaque zone sur une ligne apporte un gain en termes de temps de calcul par rapport à une corrélation faite sur l'intégralité de la zone. Du fait que la translation que l'on cherche à mesurer est une translation uniquement horizontale, le résultat est fiable. C'est particulièrement important lorsque le procédé est appliqué en temps réel lors de la restitution de la scène sur un appareil possédant une ressource de calcul limitée.

Lors d'une étape 5.2, on élimine avantageusement les zones pour lesquelles la valeur de translation dominante obtenue est aberrante s'il y en a. C'est-à-dire des valeurs trop petites ou trop grandes ou encore trop différentes des autres valeurs obtenues. Cette étape est optionnelle.

Lors d'une étape 5.3, les valeurs de translation obtenues sont regroupées en groupes de valeurs proches. L'idée est ici de regrouper des zones de l'image représentant des objets proches en termes de profondeur.

Avantageusement, pour ne tenir compte que des groupes correspondant à des zones de taille significative de l'image, on fixe un seuil sur la taille minimale d'un groupe en nombre de zones lors d'une étape 5.4. On ne retient alors que les groupes ayant un nombre minimum de membres. Par exemple, on élimine les groupes constitués d'un seul élément. On cherche à diviser l'image en groupes significatifs de profondeurs. On se concentre ainsi sur les objets d'une certaine taille à l'écran.

On utilise alors cette connaissance des translations relatives aux différents objets significatifs de l'image pour placer le plan focal. Selon l'exemple de réalisation, lors de l'étape 5.5, on calcule les moyennes des différentes valeurs de translation dominantes obtenues pour chaque zone. On choisit alors la valeur moyenne la plus forte qui correspond au groupe significatif le plus proche. De cette façon, on place le plan focal en avant de la scène. Il est toujours possible que certains objets, par exemple éliminés lors de l'opération de seuillage 5.4, ou trop petits pour influencer notablement la translation d'une zone donnée, se trouvent devant le plan focal. Toutefois, l'essentiel de la scène se trouve ainsi positionné en arrière du plan focal.

Lors de l'étape 5.6, on effectue alors la translation relative entre les images gauche et droite pour placer effectivement le plan focal à la profondeur déterminée. Cette translation peut être effectuée sur l'image droite par rapport à l'image gauche, ou sur l'image gauche par rapport à l'image droite. Il est également possible de répartir la translation sur les deux images.

Selon un autre example, on cherche à placer l'objet principal de la scène au niveau du plan focal. Pour ce faire, par exemple, on définit une seule zone dans l'image, typiquement une zone centrale. On calcule alors comme précédemment la profondeur de cette zone, ou simplement la translation correspondante et on l'applique aux images pour placer le plan focal au niveau de cette zone. Alternativement, on peut aussi choisir de placer le plan focal au niveau de profondeur du groupe ayant le plus de membres dans l'algorithme décrit précédemment.

Selon un autre mode de réalisation, on cherche à placer la scène loin derrière le plan focal pour obtenir un grand confort visuel, surtout si l'écran est proche des yeux. Dans ce cas on peut prendre la profondeur minimale sur l'ensemble des zones, c'est-à-dire la translation maximale, ou encore une valeur diminuée d'un pourcentage donné de cette profondeur minimale.

Ce procédé peut être utilisé sur une image fixe constituée d'une seule image gauche et d'une seule image droite. Il peut également être utilisé sur une séquence d'image stéréoscopique. Dans ce dernier cas, il peut être effectué comme traitement sur la séquence en dehors du processus de visualisation ou encore être effectué en temps réel lors de la visualisation ou lors de la prise de vue. Ce dernier mode de réalisation est particulièrement intéressant lorsqu'il est intégré dans un appareil de prise de vue et de restitution stéréoscopique. On peut, par exemple, l'intégrer dans un appareil tel qu'un téléphone mobile intégrant un système de prise de vue stéréoscopique, une console de jeux portable, ou une caméra stéréoscopique.

## Revendications

1. Procédé de gestion de la position du plan focal (4.10, 4.11) dans une scène
stéréoscopique représentée par une image gauche (4.7) et une image
droite (4.8) **caractérisé en ce qu'**il comporte:
- une étape de détermination d'au moins une zone dans les deux images;
- une étape de calcul de la valeur de translation dominante, c'est-à-dire pour laquelle la corrélation est la meilleure, pour chacune des zones;
- une étape de détermination d'une valeur de translation relative entre les images gauche et droite en fonction des valeurs de translation dominantes de chacune des zones de façon à ce que plus de 50% de la surface des images apparaissent comme située derrière le plan focal ;
- une étape de translation relative des deux images gauche et droite de ladite valeur précédemment déterminée.

2. Procédé selon la revendication 1, **caractérisé en ce que** l'étape de calcul de la valeur de translation dominante pour chacune des zones comprend :
- une étape de projection de la zone gauche et de la zone droite sur une ligne gauche et une ligne droite par sommation de chaque colonne desdites zones ;
- une étape de calcul de la corrélation entre la ligne gauche et la ligne droite pour plusieurs valeurs de translation;
- une étape de détermination de la valeur de translation pour laquelle la corrélation est la meilleure.

3. Procédé selon l'une des revendications 1 ou 2, **caractérisé en ce que** l'étape de détermination d'une valeur de translation relative entre les images gauche et droite comprend:
- une étape de classement des valeurs de translation dominantes de chaque zone par groupe de valeurs proches;
- une étape de calcul de la valeur moyenne des valeurs de translation dominantes au sein de chaque groupe;
- une étape de choix de la valeur moyenne la plus forte qui correspond au groupe le plus proche, comme valeur de translation relative entre les images gauche et droite.

4. Procédé selon la revendication 3, **caractérisé en ce qu'**il comprend en outre une étape d'élimination des zones pour lesquelles la valeur de translation dominante obtenue est aberrante.

5. Procédé selon la revendication 3 ou 4, **caractérisé en ce qu'**il comprend en outre une étape d'élimination des groupes de zones ne contenant pas un nombre de zones au moins égal à un seuil donné.

6. Dispositif de prise de vue ou de visualisation stéréoscopique **caractérisé en ce qu'**il comporte des moyens de gestion de la position du plan focal dans une scène stéréoscopique représentée par une image gauche et une image droite comportant :
- des moyens pour déterminer au moins une zone dans les deux images;
- des moyens pour calculer la valeur de translation dominante, c'est-à-dire pour laquelle la corrélation est la meilleure, pour chacune des zones;
- des moyens pour déterminer une valeur de translation relative entre les images gauche et droite en fonction des valeurs de translation dominantes de chacune des zones de façon à ce que plus de 50% de la surface des images apparaissent comme située derrière le plan focal ;
- des moyens pour effectuer une translation relative des deux images gauche et droite de ladite valeur précédemment déterminée.

## Patentansprüche

1. Verfahren zum Handhaben der Position der Brennebene (4.10, 4.11) in einer stereografischen Szene, die durch ein linkes Bild (4.7) und ein rechtes Bild (4.8) dargestellt wird, **dadurch gekennzeichnet, dass** es umfasst:
- ein Schritt des Bestimmens mindestens einer Zone in den zwei Bildern;
- einen Schritt des Berechnens des dominanten Verschiebungswerts, d.h. für den die Korrelation am besten ist, für jede der Zonen;
- einen Schritt des Bestimmens eines relativen Verschiebungswerts zwischen dem linken und dem rechten Bild als Funktion der dominanten Verschiebungswerte jeder der Zonen, so dass mehr als 50% der Bildfläche hinter der Brennebene zu liegen scheinen;
- einen Schritt des relativen Verschiebens der beiden linken und rechten Bilder um den zuvor bestimmten Wert.

2. Verfahren nach Anspruch 1, **dadurch gekennzeichnet, dass** der Schritt der Berechnung des dominanten Verschiebungswerts für jede der Zonen umfasst:
- einen Schritt des Projizierens der linken und der rechten Zone auf eine linke und eine rechte Linie durch Summierung jeder Spalte dieser Zonen;
- einen Schritt des Berechnens der Korrelation zwischen der linken Linie und der rechten Linie für mehrere Verschiebungswerte;
- einen Schritt des Bestimmens des Verschiebungswerts, für den die Korrelation am besten ist.

3. Verfahren nach einem der Ansprüche 1 oder 2, **dadurch gekennzeichnet, dass** der Schritt des Bestimmens eines relativen Verschiebungswerts zwischen dem linken und dem rechten Bild umfasst:
- einen Schritt des Klassifizierens der dominanten Verschiebungswerte jeder Zone nach einer Gruppe naheliegender Werte;
- einen Schritt des Berechnens des Mittelwerts der dominanten Verschiebungswerte innerhalb jeder Gruppe;
- einen Schritt des Auswählens des stärksten Durchschnittswerts, der der nächstliegenden Gruppe entspricht, als relativer Verschiebungswert zwischen dem linken und dem rechten Bild.

4. Verfahren nach Anspruch 3, **dadurch gekennzeichnet, dass** es ferner einen Schritt des Eliminierens der Zonen umfasst, für die der erhaltene dominante Verschiebungswert abnormal ist.

5. Verfahren nach Anspruch 3 oder 4, **dadurch gekennzeichnet, dass** es ferner einen Schritt des Eliminierens der Gruppen von Zonen umfasst, die keine Anzahl von Zonen enthalten, die mindestens gleich einem gegebenen Schwellenwert sind.

6. Stereoskopische Aufnahme- oder Betrachtungsvorrichtung, die **dadurch gekennzeichnet ist, dass** sie Mittel zum Handhaben der Position der Brennebene in einer stereoskopischen Szene umfasst, die durch ein linkes Bild und ein rechtes Bild dargestellt ist, umfassend:
- Mittel zum Bestimmen mindestens einer Zone in den zwei Bildern;
- Mittel zum Berechnen des dominanten Verschiebungswerts, d.h. für den die Korrelation am besten ist, für jede der Zonen;
- Mittel zum Bestimmen eines relativen Verschiebungswerts zwischen dem linken und dem rechten Bild als Funktion der dominanten Verschiebungswerte jeder der Zonen, so dass mehr als 50% der Bildfläche hinter der Brennebene zu liegen scheinen;
- Mittel zum Bewirken einer relativen Verschiebung der beiden linken und rechten Bilder um den zuvor bestimmten Wert.

## Claims

1. A method of managing the position of the focal plane (4.10, 4.11) in a stereoscopic scene represented by a left-hand image (4.7) and a right-hand image (4.8), **characterized in that** it comprises:
- a step of determining at least one zone in the two images;
- a step of calculating the dominant translation value, that is for which the correlation is the best, for each of the zones;
- a step of determining a relative translation value between the left-hand and right-hand images based on the dominant translation values of each of the zones so that more than 50% of the surface of the images appear to be located behind the focal plane, and
- a step of relative translation of the two left-hand and right-hand images by said previously determined value.

2. The method according to claim 1, **characterized in that** the step of calculating the dominant translation value for each of the zones comprises:
- a step of projecting the left-hand zone and the right-hand zone onto a left-hand line and a right-hand line;
- a step of calculating the correlation between the left-hand line and the right-hand line for several translation values;
- a step of determining the translation value for which the correlation is the best.

3. The method according to one of claims 1 or 2, **characterized in that** the step of determining a relative translation value between the left-hand and right-hand images comprises:
- a step of classifying the dominant translation values of each zone by group of close values;
- a step of calculating the mean value of the dominant translation values within each group;
- a step of choosing the highest mean value that corresponds to the closest group, as the relative translation value between the left-hand and right-hand images.

4. The method according to claim 3, **characterized in that** it also comprises a step of eliminating the zones for which the dominant translation value obtained is aberrant.

5. The method according to claim 3 or 4, **characterized in that** it also comprises a step of eliminating the groups of zones not containing a number of zones at least equal to a given threshold.

6. Photography or stereoscopic viewing device **characterized in that** it comprises means for managing the position of the focal plane in a stereoscopic scene represented by a left-hand image and right-hand image, comprising:
- means for determining at least one zone in the two images;
- means for calculating the dominant translation value, that is for which the correlation is the best, for each of the zones;
- means for determining a relative translation value between the left-hand and right-hand images based on the dominant translation values of each of the zones so that more than 50% of the surface of the images appear to be located behind the focal plane;
- means for effecting a relative translation of the two left-hand and right-hand images by said previously determined value.
